# EUROPEAN PATENT APPLICATION

(11) **EP 4 434 615 A1**
(43) Date of publication of application: **25.09.2024**
(21) Application number: 23164195.2
(22) Date of filing: 24.03.2023
(51) Int. Cl.: B01J 8/00, B01J 8/04, B01J 8/06, C01B 3/04

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ULBER, Dieter, 60439 Frankfurt am Main (DE); LODIER, Guillaume, 78350 Jouy-en-Josas (FR); REN, Vincent, 78350 Jouy-en-Josas (FR); KOT, Krzysztof, 31-545 Krakow (PL); TRUNK, Sebastian, 60388 Frankfurt am Main (DE)
(74) Representative: Air Liquide

(57) **Abstract**

The invention relates to a reactor (1) for producing a synthesis gas product comprising hydrogen from an ammonia feedstock stream, the reactor comprising:
- An outer shell tube (2), comprising a reaction chamber (3),
- An inlet (2) for the ammonia feedstock stream, said inlet being fluidically connected to the reaction chamber,
- An outlet (9) for the synthesis gas product comprising hydrogen, said outlet being configured to release the synthesis gas product from the reactor,
- A first catalyst bed (5) in a first zone (6) of the reaction chamber (3),
- A second catalyst bed (7) in a second zone (8) of the reaction chamber, said second zone being placed downstream the first zone in the ammonia feedstock stream flow direction,
the first and the second catalyst beds being arranged to perform an endothermic cracking reaction of ammonia into the reaction chamber (3), the first catalyst bed having an activation temperature that is lower than an activation temperature of the second catalyst bed.

## Description

The field of the present invention is that of a reactor for producing a synthesis gas product comprising hydrogen from an ammonia feedstock stream process for producing a synthesis gas product. The invention also relates particularly to a process for producing a synthesis gas product comprising hydrogen. The invention also relates to the use of such reactor for ammonia cracking. The invention also relates to a furnace comprising such a reactor.

The production of a synthesis gas product comprising hydrogen by an endothermic cracking reaction of an ammonia feedstock stream can be done in a catalytic reactor at elevated temperatures, generally from 400°C to 800°C. Such a unit typically comprises a metallic shell, a catalyst and an external heat source. To achieve a lowest possible CO2 footprint for the cracking process, the external heat source is provided only by a combustion of an ammonia fuel stream in a furnace. The process requires a high quantity of heat and energy.

It is not possible today to have a homogeneous temperature all along a reactor of an endothermic reaction. A catalyst in a reactor unit has specific properties, such as a specific activation temperature and stability properties. Thus, the catalyst does not have the same activity all along the reactor and the conversion rate is not optimized.

The invention proposes a reactor in which conversion rate is optimized according to the temperature profile all along the reactor.

For this purpose, the invention proposes a reactor for producing a synthesis gas product comprising hydrogen from an ammonia feedstock stream, the reactor comprising:
- An outer shell tube, comprising a reaction chamber,
- An inlet for the ammonia feedstock stream, said inlet being fluidically connected to the reaction chamber,
- An outlet for the synthesis gas product comprising hydrogen, said outlet being configured to release the synthesis gas product from the reactor,
- A first catalyst bed in a first zone of the reaction chamber,
- A second catalyst bed in a second zone of the reaction chamber, said second zone being placed downstream the first zone in the ammonia feedstock stream flow direction,
- The first and the second catalyst beds being arranged to perform an endothermic cracking reaction of ammonia into the reaction chamber, the first catalyst bed having an activation temperature that is lower than an activation temperature of the second catalyst bed.

The reactor of the invention allows to optimize the cracking reaction all along the reaction chamber and to limit the degradation of the catalyst beds which have their own activation temperature.

According to one aspect of the invention, the first zone is adjacent to the second zone.

According to one aspect of the invention, the first zone and the second zone are separated by a fluid permeable layer arranged to retain the first catalyst bed in the first zone and the second catalyst bed in the second zone. In a variant, the catalysts of the first and second catalyst beds may be filled one upon another.

According to one aspect of the invention, the activation temperature of the first catalyst bed is comprised between 200°C and 400°C.

According to one aspect of the invention, the activation temperature of the second catalyst bed is comprised between 300°C and 500°C.

The ammonia feedstock stream inlet temperature is lower than the synthesis gas product outlet temperature. Indeed, the temperature of the reactor increases all along the tube. Thus, because the activation temperature of the first catalyst bed is lower than the activation temperature of the second catalyst bed, the cracking reaction is optimized and the catalyst beds are not damaged by a too high temperature of the ammonia feedstock stream and/or the partially cracked synthesis gas stream.

According to one aspect of the invention, the catalyst beds comprise a catalytically active material, in particular a catalytically active material on a carrier, for example an aluminum oxide (AI2O3) carrier. Such material is able to avoid nitridation.

According to one aspect of the invention, the first and the second catalyst beds comprise the same catalytically active material, for example nickel as a catalytically active material.

According to one aspect of the invention, the first and the second catalyst beds comprise a different concentration of the same catalytically active material, for example a catalytically active material comprising nickel. For example, the first catalyst bed comprises from 10 to 50 wt% of nickel, preferably from 20 to 40 wt% of nickel as a catalytically active material, and the second catalyst bed comprises from 10 to 45 wt% of nickel, preferably from 15 to 30 wt% of nickel as a catalytically active material.

According to one aspect of the invention, the first catalyst bed comprises a catalytically active material different from the catalytically active material of the second catalyst bed. For example, the first catalyst bed comprises ruthenium as a catalytically active material and the second catalyst bed comprises nickel as a catalytically active material.

According to one aspect of the invention, the first catalyst bed comprises from 0.5 to 4 wt% of ruthenium as a catalytically active material.

According to one aspect of the invention, the catalyst beds are structured catalyst layers.

According to one aspect of the invention, the catalyst beds are dumped catalyst beds.

According to one aspect of the invention, the reactor comprises more than two catalyst beds, each catalyst bed being arranged in a different zone of the reaction chamber.

According to one aspect of the invention, the catalyst bed comprised in the zone the closest to the ammonia feedstock stream inlet has the lowest activation temperature of all the catalyst beds, and the catalyst bed comprised in the zone the closest to the synthesis gas product outlet has the highest activation temperature of all the catalyst beds.

According to one aspect of the invention, the catalyst beds are arranged so that their activation temperature are increasing from the inlet to the outlet, each catalyst bed having its activation temperature.

According to one aspect of the invention, the second catalyst bed is arranged so that the ammonia feedstock stream flowing in said second catalyst bed has a higher temperature than the ammonia feedstock stream circulating in the first catalyst bed.

According to one aspect of the invention, the reactor is arranged to be heated by an external heat source.

According to one aspect of the invention, the second catalyst bed is arranged to be heated by said external heat source so that the ammonia feedstock stream flowing through said second catalyst bed is heated and the first catalyst bed is arranged so that the ammonia feedstock stream flowing through said first catalyst bed is at a lower temperature than in the second catalyst bed. Hence, the second catalyst bed will start safely before coming close to the first catalyst bed maximum application temperature. By catalyst bed maximum application temperature, we mean here the maximum temperature to which a catalyst bed may be subjected. Beyond such a maximum application temperature the catalyst may be damaged.

According to one aspect of the invention, the reactor is arranged so that the synthesis gas product at the outlet of the reactor has a temperature comprised between 600°C and 800°C.

According to one aspect of the invention, the reactor is arranged so that the ammonia feedstock stream at the inlet of the reactor has a temperature comprised between 150°C and 650°C.

According to one aspect of the invention, the reactor comprises a protective layer, said protective layer being arranged to retain impurities from the ammonia feedstock stream, said protective layer being arranged upstream the first zone of the reaction chamber in the ammonia feedstock stream flow direction.

According to one aspect of the invention, the protective layer comprises at least one material arranged to retain impurities (impurities such as for example chlorine, chlorides, iron, chromium, oils or salts) from the ammonia feedstock stream, said material being for example chosen among copper or nickel or a material with a specific surface area.

According to one aspect of the invention, the protective layer comprises from 20 to 45 wt% of nickel.

According to one aspect of the invention, the reactor has a length extending all along said reactor.

According to one aspect of the invention, the reactor length is delimited by two extremities and a longitudinal wall delimiting an internal volume of said reactor. In one aspect of the invention, the longitudinal wall is a cylindrical wall extending between the two extremities.

According to one aspect of the invention, the protective layer has a length in the range 0 to 20% of the reaction chamber length, preferably from 5 to 20% of the reactor length.

According to one aspect of the invention, the reactor comprises a heat exchanger arranged in a heat exchange relationship with the reaction chamber.

According to one aspect of the invention, the heat exchanger is arranged inside the reaction chamber, wherein the reactor is configured to, after entry of the ammonia feedstock stream into the reaction chamber, make the ammonia feedstock stream flow through the catalyst bed arranged in the first zone and through the catalyst bed arranged in the second zone for a catalytic conversion of the ammonia feedstock stream into a synthesis gas product in the catalyst beds, and make the synthesis gas product flow through the heat exchanger, said heat exchanger being arranged inside the reaction chamber to be in a heat exchange relationship with the catalyst beds and the ammonia feedstock stream. In other words, the reactor comprises a set of volumes to make the ammonia feedstock stream and the partially cracked synthesis gas stream circulates through the catalyst beds and make the synthesis gas product flow through the heat exchanger.

In one aspect of the invention, the reactor is configured to make the ammonia feedstock stream circulate through the catalyst beds and make the synthesis gas product flow through the heat exchanger in countercurrent to the circulation through the catalyst beds. According to one aspect of the invention, the heat exchanger comprises at least one synthesis gas product circulation duct, said duct being arranged for the heat exchanges between the discharged synthesis gas product and the catalyst beds.

According to one aspect of the invention, the synthesis gas product circulation duct is made of stainless steels comprising nickel such as alloy 600, alloy 625, stainless steel SS310, steel coated with nickel, or aluminized steel. Such material is able to foster the ammonia conversion into hydrogen and nitrogen, and to avoid nitridation.

According to one aspect of the invention, the wall of the shell tube is configured to be protected against nitridation. The protection against nitridation may be implemented through the overall thickness of the wall or only on a portion of the thickness of the wall.

According to one aspect of the invention, the wall of the shell is centrifugally cast.

According to one aspect of the invention, the wall of the shell tube is a micro-alloyed wall.

According to one aspect of the invention, the wall of the shell tube comprises a material configured to be protected against nitridation, the inner wall of the shell tube being optionally aluminized or coated with a weld-overlay.

According to one aspect of the invention, the wall of the shell tube does not comprise a corrosion protection layer. In this invention, there is no metal dusting issue leading to corrosion.

According to one aspect of the invention, the heat exchanger is configured to recover heat from the catalytic conversion in the reaction chamber and direct the recovered heat to the reaction chamber, in particular to the catalyst beds.

According to one aspect of the invention, the heat exchanger is a heat exchange coil.

According to one aspect of the invention, the heat exchange coil comprises the synthesis gas product circulation duct.

According to one aspect of the invention, the heat exchanger comprises two synthesis gas product circulation ducts.

According to one aspect of the invention, the heat exchanger comprises two heat exchange coils, said heat exchange coils being interlaced. Said heat exchange coils may be helical or partially straight and helical.

According to one aspect of the invention, the heat exchanger comprises an entry configured to provide the synthesis gas product into said synthesis gas product circulation duct after the catalytic conversion of the ammonia feedstock stream in the catalyst beds.

According to one aspect of the invention, the heat exchanger comprises an exit arranged to discharge the synthesis gas product from the heat exchanger.

According to one aspect of the invention, the reaction chamber is a part of the reactor arranged for the cracking reaction.

According to one aspect of the invention, the reaction chamber comprises all the zones comprising catalyst beds.

According to one aspect of the invention, the reaction chamber has a total length extending all along the zones comprising catalyst beds.

According to one aspect of the invention, the first zone has a length in a range 10% to 50% of the reaction chamber total length, preferably from 20% to 40%. The first zone may start at the beginning of the reaction chamber. In a variant, the first zone starts at a point that is remote from the beginning of the reaction chamber. For example, the starting point of the first zone may be located in the first 20% of the length of the reaction chamber. The first zone may end in a region of the reaction chamber between the first 20% and 50% of the length of the reaction chamber.

According to one aspect of the invention, the second zone has a length in a range 90% to 50% of the reaction chamber total length, preferably from 80% to 60%. The second zone may start in a region of the reaction chamber between the first 20% and 50% of the total length of the reaction chamber. The second zone may end at the end of the reaction chamber.

The invention also relates to a furnace for cracking ammonia comprising at least one reactor as disclosed above, and at least one heating device for heating the reactor.

According to one aspect of the invention, the furnace comprises a plurality of reactors and/or a plurality of heating device as disclosed previously.

According to one aspect of the invention, the heating device comprises a firing chamber arranged to heat the reactors by a combustion reaction of a fuel gas.

According to one aspect of the invention, the reactors are arranged in the firing chamber.

According to one aspect of the invention, the firing chamber is delimited by at least a wall, said wall being in particular thermally insulating.

According to one aspect of the invention, the firing chamber is delimited by an upper wall, a lower wall and at least one longitudinal wall, for example a cylindrical wall, said walls being in particular thermally insulating. In another example, the at least one longitudinal wall comprises four lateral walls. In particular, the firing chamber has the shape of a box. According to one aspect of the invention, the reaction chamber length of a reactor is measured from said upper wall of the firing chamber to the lower wall of the firing chamber.

According to one aspect of the invention, the firing chamber comprises at least one burner arranged to combust the fuel gas stream in said firing chamber to provide heat to the reactor.

According to one aspect of the invention, the at least one burner is arranged at the ammonia feedstock stream inlet side of the reactor.

According to one aspect of the invention, the reactors are fluidically arranged in parallel to each other.

According to one aspect of the invention, the burner is arranged on the upper wall of the firing chamber.

According to one aspect of the invention, the burner is arranged on the lower wall of the firing chamber.

The invention also relates to a process for producing a synthesis gas product comprising hydrogen by an endothermic cracking reaction of an ammonia feedstock stream comprising the following steps:
- feeding of the ammonia feedstock stream through an inlet into a reactor comprising a reaction chamber,
- performing a first endothermic reaction of the ammonia feedstock stream at a first temperature, in a first temperature range, in a first zone of the reaction chamber, thereby obtaining a partially cracked synthesis gas stream,
- performing a second endothermic reaction of the ammonia feedstock stream at a second temperature, in a second temperature range, in a second zone of the reaction chamber, downstream the first zone, in the flow direction of the ammonia feedstock stream and partially cracked synthesis gas stream, thereby obtaining a cracked synthesis gas stream, optionally comprising unconverted ammonia,
- the second temperature being higher than the first temperature,
- discharging the gas product obtained in the first and second endothermic reactions through an outlet.

According to one aspect of the invention, the first endothermic reaction is performed over a first catalyst bed, and the second endothermic reaction is performed over a second catalyst bed different from the first one.

According to one aspect of the invention, the process comprising a step of heating the reaction chamber by an external heat.

According to one aspect of the invention, the ammonia feedstock stream is heated by said external heat in the first and second catalyst beds to perform said first and second endothermic reactions.

According to one aspect of the invention, the ammonia feedstock stream and/or partially cracked synthesis gas stream circulates at a lower temperature in the first catalyst bed than in the second catalyst bed. Hence, the second catalyst bed will start safely before coming close to the first catalyst bed maximum application temperature

According to one aspect of the invention, the first endothermic reaction is performed at a temperature comprised between 200°C and 400°C.

According to one aspect of the invention, the second endothermic reaction is performed at a temperature comprised between 300°C and 500°C.

According to one aspect of the invention, the ammonia feedstock stream enters into the reactor through the ammonia feedstock stream inlet at a temperature comprised between 150°C and 650°C.

According to one aspect of the invention, the cracked synthesis gas stream is discharged by the synthesis gas product outlet at a temperature comprised between 600°C and 800°C.

The invention also relates to the use of the reactor disclosed previously for an endothermic cracking reaction of an ammonia feedstock stream into a synthesis gas product.

Further features, details and advantages of the invention will become more clearly apparent from reading the description given below by way of indication with reference to the drawings, in which:
Fig 1 is a schematic view of the reactor according a first embodiment of the invention,
Fig. 2 is a schematic view of the reactor according a second embodiment of the invention,
Fig. 3 is a schematic view of the reactor according a third embodiment of the invention,
Fig. 4 is a schematic view of the reactor according a fourth embodiment of the invention,
Fig. 5 is a schematic view of a furnace comprising reactors of figure 1.
Fig. 6 is a schematic view of a furnace according to another embodiment comprising reactors of figure 1.

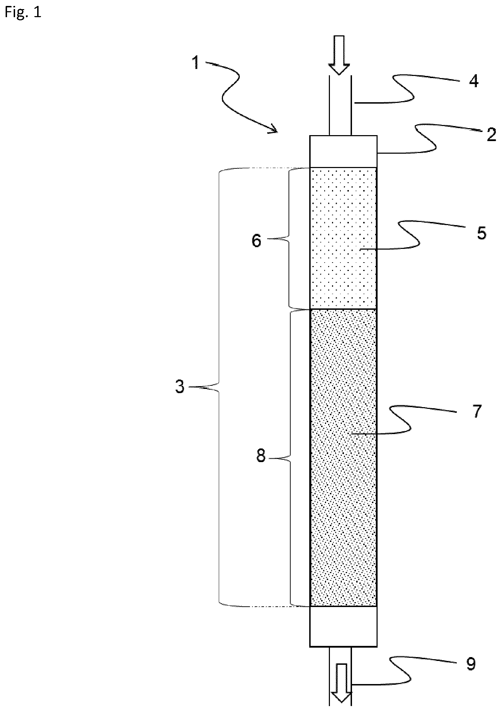

Figure 1 is a schematic representation of a reactor for producing a synthesis gas comprising hydrogen from an ammonia feedstock stream according to a first embodiment.

In this embodiment, the reactor 1, of overall length L, comprises an outer shell tube 2, said outer shell tube 2 being pressurized. The outer shell tube 2 comprises a reaction chamber 3 in which a catalytic conversion of the ammonia feedstock stream is realized, said catalytic conversion being a cracking reaction.

The outer shell tube 2 comprises an ammonia feedstock stream tube inlet 4, the tube inlet 4 being configured to let the fluid enter in the outer shell tube 2, and more precisely in the reaction chamber 3.

The reaction chamber 3 comprises here two catalyst beds, a first catalyst bed 5 in a first zone 6 of the reaction chamber 2 and a second catalyst bed 7 arranged in a second zone 8 of the reaction chamber 3. The first zone 6 is arranged downstream the second zone 8 in the reaction chamber 3 in the ammonia feedstock stream flow direction.

The reactor 1 comprises an outlet 9 for the synthesis gas product comprising hydrogen, said outlet 9 being configured to release the synthesis gas product from the reactor 1 after the ammonia feedstock stream has been cracked into said synthesis gas product.

The reactor 1 is configured so that the ammonia feedstock stream enters into the reactor 1 by the inlet 4 and flows through the first catalyst bed 5 which is in the first zone 6, flow through the second catalyst bed 7 which is in the second zone 8. In the first and second catalyst beds 5, 7, the ammonia feedstock stream is cracked into the synthesis gas product comprising hydrogen. Then the reactor 1 is arranged so that the synthesis gas product gets out the reactor 1 by the outlet arranged to release said synthesis gas product.

The first catalyst bed 5 is closer to the ammonia feedstock stream inlet 2 than the second catalyst bed 7. Said first catalyst bed 5 has an activation temperature which is lower than the activation temperature of the second catalyst bed 7. The first catalyst bed 5 and the second catalyst bed 7 comprise both a catalytically active material, in particular a catalytically active material on a carrier, for example an aluminum oxide (Al2O3) carrier. Such material is able to avoid nitridation. The first catalyst bed 5 is arranged to perform the cracking reaction of the ammonia feedstock stream at a temperature lower than the second catalyst bed 7, obtaining a partially cracked synthesis gas stream. The first catalyst bed 5 comprises for example as a catalytically active material 10 to 50 wt% of nickel, preferably from 20 to 40 wt% of nickel, or from 0.5 to 4 wt% of ruthenium. The second catalyst bed 7 comprises for example as a catalytically active material from 10 to 45 wt% of nickel, preferably from 15 to 30 wt% of nickel. The second endothermic reaction of the ammonia feedstock stream takes place downstream the first zone, in the flow direction of the ammonia feedstock stream and partially cracked synthesis gas stream, thereby obtaining a cracked synthesis gas stream, optionally comprising unconverted ammonia.

The first catalyst bed 5 is arranged to perform the cracking reaction at a temperature comprised between 200°C and 400°C and the second catalyst bed 7 is arranged to perform the cracking reaction at a temperature comprised between 300°C and 500°C.

In other words, the first catalyst bed 5 can have the same catalytically active material as the second catalyst bed 7 but with a different concentration of said catalytically active material, or the first catalyst bed 5 can have a catalytically active material that is different from the second catalyst bed 7.

The reactor is arranged so that the temperature of the ammonia feedstock stream at the inlet is comprised between 150°C and 650°C and the cracked synthesis gas stream is discharged by the synthesis gas product outlet at a temperature comprised between 600°C and 800°C.

The first catalyst bed 5 and the second catalyst bed 7 are for example two structured catalyst layers or two dumped catalyst beds.

The reaction chamber 3 has a length I extending all along the first and the second zones comprising first and second catalyst beds. The first zone has a length in a range 10% to 50% of the reaction chamber length I and the second zone has a length in a range 90% to 50% of the reaction chamber length I.

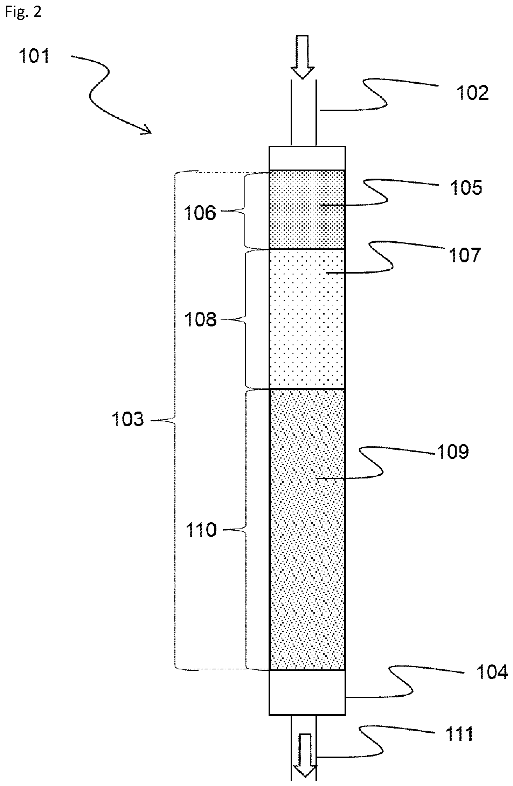

Figure 2 is a schematic representation of a reactor for producing a synthesis gas comprising hydrogen from an ammonia feedstock stream according to a second embodiment.

In this embodiment, the reactor 101 comprises three catalyst beds 105, 107 and 109 which are arranged in the reaction chamber 103.

The first catalyst bed 105 is arranged in a first zone 106 which is downstream the second catalyst bed 107, said second catalyst bed 107 being arranged in a second zone 108 which is arranged downstream a third catalyst bed 109 which is arranged in a third zone 110 of the reaction chamber 103.

The first catalyst bed 105 is the closest to the ammonia feedstock stream inlet 104 and has the lowest activation temperature. The third catalyst bad 109 is the closest to the synthesis gas product outlet 111 and has the highest activation temperature. The second catalyst bed 107 is between the first 105 and the third 109 catalyst beds and has an activation temperature which is comprised between the activation temperature of the first catalyst bed 105 and an activation temperature of the third catalyst bed 109.

In another embodiment not shown here, the reactor 101 comprises more than three catalyst beds. The catalyst beds have different activation temperature and comprise either different catalytically active material or the same catalytically active material in different concentrations.

The other features of the second embodiment are similar to the first embodiment.

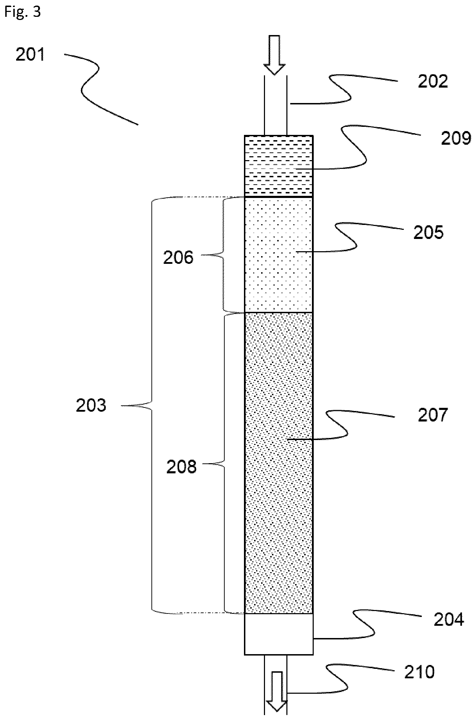

Figure 3 is a schematic representation of a reactor for producing a synthesis gas comprising hydrogen from an ammonia feedstock stream according to a third embodiment.

The features of the first embodiment are similar to the features of the third embodiment. In the third embodiment, in addition to the features of the first embodiment, the reactor 201 comprises a protective layer 209 located upstream the reaction chamber 203, and more precisely upstream the first catalyst bed 205. This protective layer 209 is fluidically connected to the ammonia feedstock stream inlet 202 and is arranged to retain the impurities from the ammonia feedstock stream before it flows through the first catalyst bed 105 and the second catalyst bed 207.

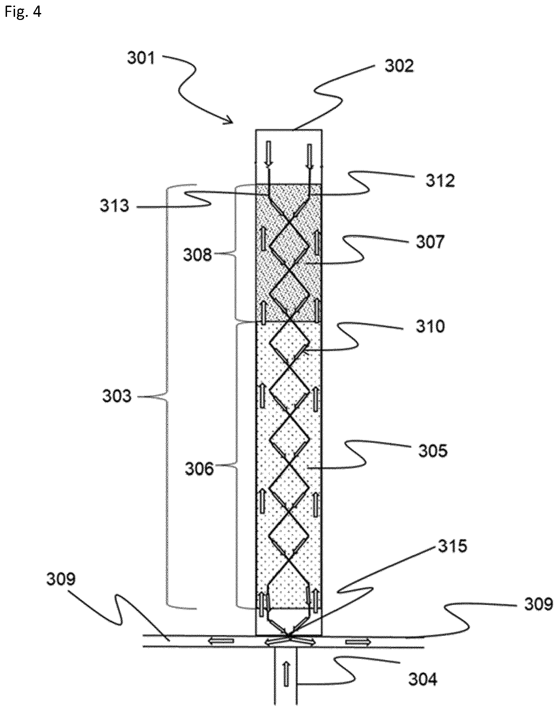

Figure 4 is a schematic representation of a reactor for producing a synthesis gas comprising hydrogen from an ammonia feedstock stream according to a fourth embodiment.

The features of this embodiment are similar to the features of the first embodiment.

In addition to the first embodiment features, the outer shell tube 302, and more precisely the reaction chamber 303, comprises here a heat exchanger 310, said heat exchanger 310 being arranged inside the reaction chamber 303 so as to be in a heat exchange relationship with the catalyst beds 305 and 307 and the ammonia feedstock stream. In this embodiment, the heat exchanger 310 comprises two heat exchange coils 312, 313, said exchange coils 312, 313 being interlaced.

The catalyst beds 305, 307 are configured to be partially heated by an external heat from an external heat source. The external heat source is for example an external firing or electrical heating. The ammonia feedstock stream is thus converted into a gas synthesis product comprising hydrogen. The ammonia feedstock is heated and said heat is provided to the cracking reaction. Then, the already cracked gas is further heated. When the hot gas synthesis product flows through the synthesis gas product circulation ducts of the heat exchanger 310, it transfers internally its heat to the catalyst beds 305, 307. Hence, the catalyst beds are heated by an external heat source, and by an internal heat source. The consumption of external heat is thus reduced. Here, the synthesis gas product flows through the heat exchanger 310 in a countercurrent manner in respect to the ammonia feedstock stream and partially cracked synthesis gas stream through the catalyst beds.

The synthesis gas product circulation ducts are made of a thermal conductive material, such as a metal alloy, for example alloy 600. In another embodiment not shown here, the heat exchanger comprises one tube, or at least two tubes made of said thermal conductive material.

The reactor 301 is configured to, after entry into the reaction chamber 303 by the entry, make the ammonia feedstock stream flow through the catalyst first catalyst bed 305, then through the second catalyst bed 307 for the cracking reaction of at least part of the feedstock stream into a synthesis gas product in the catalyst beds 305, 307, and make the synthesis gas product flow through the circulation ducts comprised in the heat exchanger 310, said heat exchanger 310 being arranged inside the reaction chamber 303.

The heat exchanger comprises an exit 315 arranged to discharge the synthesis gas product from the heat exchanger.

The reactors of the second and third embodiment could also be combined with a heat exchanger as disclosed here.

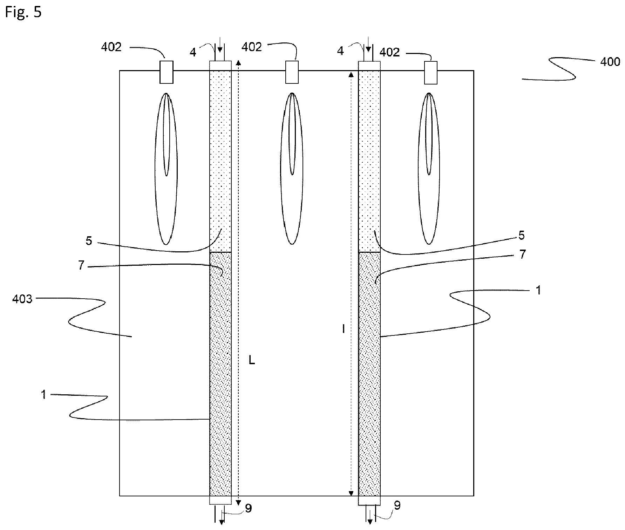

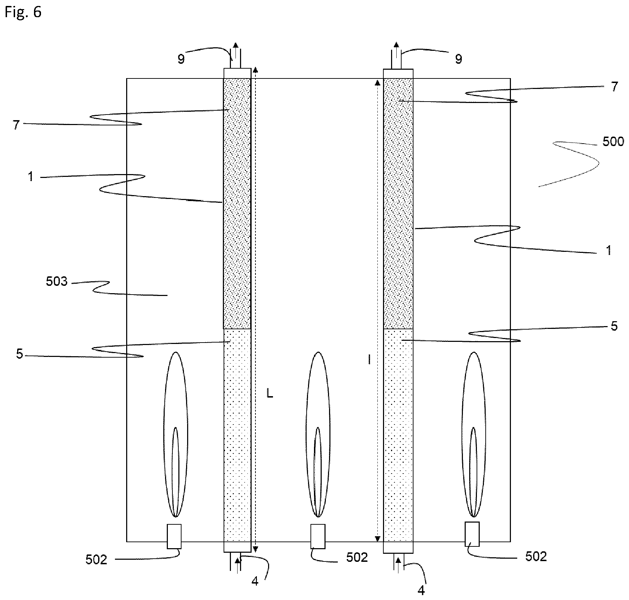

Figure 5 and 6 are schematic representations of a furnace for cracking ammonia comprising a plurality of reactors 1 as disclosed in figure 1 in a firing chamber 403. The furnace 400 comprises a plurality of burners 402 which are configured to generate flames and heat the reactors 1. In this embodiment, the reactors 1 are fluidically arranged parallel to each other.

The furnace comprises an upper wall, a lower wall and a longitudinal wall, said walls being thermally insulating. These walls are arranged to delimit the furnace. The at least one longitudinal wall comprises four lateral walls and the firing chamber has the shape of a box.

In the embodiment of figure 5, the burners and the reactor inlets are arranged at the upper wall. In the embodiment of figure 6, the burners and the reactor inlets are arranged at the lower wall.

The reactors shown is figures 5 and 6 could be the reactors 101, 201, 301 of the second, third and fourth embodiment of the invention.

## Claims

1. A reactor (1) for producing a synthesis gas product comprising hydrogen from an ammonia feedstock stream, the reactor comprising:
- An outer shell tube (2), comprising a reaction chamber (3),
- An inlet (2) for the ammonia feedstock stream, said inlet being fluidically connected to the reaction chamber,
- An outlet (9) for the synthesis gas product comprising hydrogen, said outlet being configured to release the synthesis gas product from the reactor,
- A first catalyst bed (5) in a first zone (6) of the reaction chamber (3),
- A second catalyst bed (7) in a second zone (8) of the reaction chamber, said second zone being placed downstream the first zone in the ammonia feedstock stream flow direction,
the first and the second catalyst beds being arranged to perform an endothermic cracking reaction of ammonia into the reaction chamber (3), the first catalyst bed having an activation temperature that is lower than an activation temperature of the second catalyst bed.

2. A reactor according to claim 1, wherein the activation temperature of the first catalyst bed (5) is comprised between 200°C and 400°C.

3. A reactor according to any of claims 1 and 2, wherein the activation temperature of the second catalyst bed (7) is comprised between 300°C and 500°C.

4. A reactor according to any of the preceding claims, wherein the first and the second catalyst beds comprise a different concentration of the same catalytically active material, for example a catalytically active material comprising nickel.

5. A reactor according to any of claims 1 to 3, wherein the first catalyst bed (5) comprises a catalytically active material different from the catalytically active material of the second catalyst bed (7).

6. A reactor according to any of the preceding claims, wherein the reactor comprises more than two catalyst beds, each catalyst bed being arranged in a different zone of the reaction chamber, and the catalyst beds are arranged so that their activation temperature are increasing from the inlet to the outlet, each catalyst bed having its activation temperature.

7. A reactor according to any of the preceding claims, wherein the wall of the shell tube (2) is configured to be protected against nitridation.

8. A reactor according to any of the preceding claims, wherein the reaction chamber (3) has a total length extending all along the zones comprising catalyst beds and the first zone has a length in a range 10% to 50% of the reaction chamber total length, preferably from 20% to 40%.

9. A reactor according to any of the preceding claims, wherein the reaction chamber (3) has a total length extending all along the zones comprising catalyst beds, and the second zone has a length in a range 90% to 50% of the reaction chamber total length, preferably from 80% to 60%.

10. A process for producing a synthesis gas product comprising hydrogen by an endothermic cracking reaction of an ammonia feedstock stream, comprising the following steps:
- feeding of the ammonia feedstock stream through an inlet (2) into a reactor (1) comprising a reaction chamber (3),
- performing a first endothermic reaction of the ammonia feedstock stream at a first temperature, in a first temperature range, in a first zone (6) of the reaction chamber, thereby obtaining a partially cracked synthesis gas stream,
- performing a second endothermic reaction of the ammonia feedstock stream at a second temperature, in a second temperature range, in a second zone (7) of the reaction chamber, downstream the first zone, in the flow direction of the ammonia feedstock stream and partially cracked synthesis gas stream, thereby obtaining a cracked synthesis gas stream, optionally comprising unconverted ammonia,
- the second temperature being higher than the first temperature,
- discharging the gas product obtained in the first and second endothermic reactions through an outlet.

11. A process according to claim 10, wherein the first endothermic reaction is performed over a first catalyst bed, and the second endothermic reaction is performed over a second catalyst bed different from the first one.

12. A process according to claim 10 or 11, wherein the first endothermic reaction is performed at a temperature comprised between 200°C and 400°C.

13. A process according to any of claims 10 to 12, wherein the second endothermic reaction is performed at a temperature comprised between 300°C and 500°C.

14. Use of the reactor according to any of claims 1 to 9, for an endothermic cracking reaction of an ammonia feedstock stream into a synthesis gas product.
